# EUROPEAN PATENT SPECIFICATION

(11) **EP 2 836 691 B1**
(45) Date of publication and mention of the grant of the patent: **14.11.2018**
(21) Application number: 13714216.2
(22) Date of filing: 03.04.2013
(51) Int. Cl.: F02M 35/112, F01P 3/20, F01P 11/04, F01P 11/06, F01P 7/14, F02M 26/23, F02B 29/04, F02M 35/10

(54) **CHARGE AIR GUIDE ELEMENT FOR INTERNAL COMBUSTION ENGINE**
LADELUFTFÜHRUNGSELEMENTEN FÜR VERBRENNUNGSMOTOR
ÉLÉMENT DE GUIDAGE D'AIR DE SURALIMENTATION POUR MOTEUR À COMBUSTION INTERNE

(30) Priority: 05.04.2012 EP 12163337
(43) Date of publication of application: 18.02.2015
(73) Proprietor: Caterpillar Motoren GmbH & Co. KG, 24159 Kiel (DE)
(72) Inventor: BAKINDI, Bilal, 24159 Kiel (DE); REBELEIN, Werner, 24159 Kiel (DE); RICKERT, Carsten, 24114 Kiel (DE); SEIDEL, Frank, 24161 Altenholz (DE)
(74) Representative: BRP Renaud & Partner mbB Rechtsanwälte Patentanwälte Steuerberater
(86) International application number: PCT/EP2013/000996
(87) International publication number: WO 2013/149727

(56) References cited:
- EP-A2- 1 329 610
- WO-A1-2008/104402
- DE-C1- 4 306 137
- US-A1- 2002 043 234
- US-A1- 2009 126 670

## Description

### Technical Field

The present disclosure generally refers to internal combustion engines and more particularly to charge air systems and cooling systems for internal combustion engines.

### Background

Medium speed internal combustion engines comprise a large amount of components. Some of those components are subject to service at, for example, components of cylinder unit such as the pistons. Besides physical wear, various components may further be subject to chemical active substances such as aggressive fuel and exhaust gas.

Internal combustion engines exhaust a complex mixture of air pollutants. These air pollutants are composed of gaseous compounds such as nitrogen oxides (NO_{X}), and solid particulate matter also known as soot. Due to increased environmental awareness, exhaust emission standards have become more stringent, and the amount of NO_{X} and soot emitted to the atmosphere by an engine may be regulated depending on the type of engine, size of engine, and/or class of engine.

In order to ensure compliance with the regulation of NO_{X}, a strategy called exhaust gas recycling (EGR) for mixing the exhaust gas into the charge air may be implemented. EGR may reduce NO_{X} emission. As an exemplary EGR system, the EP application EP 2 218 896 A1 discloses a turbocharged engine with EGR. As another example, the EP application EP 2 333 292 A1 discloses a two-stage turbocharged engine with exhaust gas recycling using a specifically shaped mixing pipe configuration.

In addition to the conventional exhaust gas system, which is inherently subjected to any corrosiveness of the exhaust gas, an EGR system subjects also components of the charge air system to the corrosiveness of the exhaust gas by adding the corrosive exhaust gas to the charge air.

The large dimensions of medium speed internal combustion engines may result in large charge air systems and large exhaust gas systems of similar dimensions as the combustion engine. For example, charge air or exhaust gas pipes may extend along the sides of the internal combustion engines from one turbocharger to the other. Complex structures affect the serviceability of specific components of the engines.

US 2002/0043234 A1 discloses a resin intake manifold including a plurality of pipe sections which connect an interior of the chamber sections to cylinders of a multi-cylinder internal combustion engine.

EP 1 329 610 A2 discloses an inlet air arrangement for a piston engine that provides a suction air heat transfer apparatus positioned within a suction air collector chamber. The air heat transfer can be operated with two separate flow circuits which operate on different temperature levels. The cooled suction air is provided to the engine cylinders.

JP 2 130246 A discloses an engine with an oil-cooling system, wherein oil cools the periphery of a combustion chamber and the periphery of the intake and exhaust valves as well as the periphery of a cylinder prior to being returned to an oil pan. The oil is guided along a plurality of circumferential recessed grooves on the outer periphery of the cylinder.

DE 43 06 137 C1 discloses an engine with a water ring surrounding a liner as well as a flame ring. The flame ring is provided with a cooling channel system that is in fluid connection with ring-shaped cooling chambers formed between the water ring and the cylinder liner/flame ring.

Further charge air systems are disclosed, for example, in US 2009/0126670 A1 and WO 2008/104402 A1.

Medium speed internal combustion engines may moreover be adapted for the use with fuels such as diesel fuel, light fuel oil (LFO), heavy fuel oil (HFO), alternative fuels of first generation biofuels (for example, palm oil, canola oil, oils based on animal fat) and second generation biofuels (for example, oils made of non food corps, i.e. waste biomass) that produce an exhaust gas that is destructive, for example, corrosive, to the components with which the exhaust gas gets in contact.

The present disclosure is directed, at least in part, to improving or overcoming one or more aspects of prior systems.

### Summary of the Disclosure

According to an aspect of the present disclosure, a charge air guide element for an intake manifold of an internal combustion engine with a plurality of cylinder units may comprise a through flow section comprising a first passage fluidly connecting a front side of the charge air guide element with a back side of the charge air guide element and a supply section at a cylinder unit side of the through flow section that comprises a second passage fluidly connecting top side of the charge air guide element with the first passage. The charge air guide element may further comprise, integrated into a wall structure of the charge air guide element, a cooling water channel system that comprises at least one opening at the cylinder unit side of the through flow section, which opens towards the top side of the charge air guide element, and at least one opening at an access side of the charge air guide element, the access side being opposite to the cylinder unit side.

According to another aspect of the present disclosure, a water ring element for being mounted to an engine block of an internal combustion engine may comprise a cylinder liner section with a wall structure surrounding a through hole to provide a passage for a respective cylinder liner in a mounted state of the water ring element, and a cooling system for cooling the cylinder liner in the mounted state of the water ring element, wherein the cooling system may have a conduit structure with at least one opening at an outside of the wall structure that opens towards the engine block side of the water ring element.

According to another aspect, an internal combustion engine may comprise an engine block with a top side, a first end side, and a second end side, the second end side opposing the first end side, a plurality of cylinder units mounted at the top side and having cylinder liners reaching into the engine block, a charge air system comprising an inlet manifold for distributing charge air to each of the plurality of cylinder units, wherein the inlet manifold comprises a plurality of charge air guide elements as described above. The internal combustion engine may further comprise a plurality of water ring elements as described above, each mounted at the top side such that the at least one opening of the cooling system of each water ring element and the at least one opening of the cooling water channel system of the respective charge air element are fluidly connected.

In some embodiments of charge air guide elements, the cooling water channel system may comprises a supply channel and a return channel, each having an opening at the cylinder unit side of the through flow section, which opens essentially in the direction into which the second outlet opening opens.

In some embodiments, charge air guide elements may be one-piece cast parts. In addition or alternatively, water ring elements may be one-piece cast parts.

In some embodiments, a plurality of charge air guide elements may be configured to provide a fluid connection from an exit of a compressor stage to each of the cylinder units.

In general, an inlet manifold external to the engine block may provide good access and may be easy to mount, operate, and replace in comparison to an internal inlet manifold being integrated within the engine block. This applies in particular to an inlet manifold comprised of charge air guide elements.

For example, corrosion caused by exhaust gas supplemented to the charge air may cause damage components of the charge air system such as the charge air guide element of the inlet manifold. An exchange of a damaged component located at the outside may be easily serviced and may not affect the engine block, as, for example, air guide elements and mixing pipes may be formed as separate cast parts that then may be replaced if damaged.

Moreover, a configuration of a water ring element and a charge air guide element as described above may allow demounting the cylinder head and the water ring element for service purposes without the need of demounting the charge air system and the cooling water system.

Positioning of cooling water drainage ports at different positions may further simplify the replacement of a water ring element.

Configurations of charge air guide elements as disclosed herein may further allow implementing a charge air guide element for different configurations of internal combustion engines such as in-line configurations or V-configurations.

Other features and aspects of this disclosure will be apparent from the following description and the accompanying drawings.

### Brief Description of the Drawings

Fig. 1 is a schematic perspective view of an internal combustion engine in in-line configuration;
Fig. 2 is a schematic cut view of the internal combustion engine of Fig. 1;
Fig. 3 is a schematic perspective view of a water ring element and a charge air guide element;
Fig. 4 is a schematic cut view of a water ring element, a charge air guide element, and cooling water pipes in the mounted state for an in-line configuration;
Figs. 5 and 6 are further schematic perspective views of the charge air guide element of Fig. 3;
Fig. 7 is a schematic cut view of a water ring element, a charge air guide element, and cooling water pipes in the mounted state for an in-line configuration;
Fig. 8 is a schematic illustration of the flow of charge air within the internal combustion engine of Fig. 1;
Fig. 9 is a schematic perspective view of a further embodiment of a charge air guide element; and
Fig. 10 is a schematic cut view through the mounted state of the charge air guide element of Fig. 9 and a water ring element.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that EGR may result in damages to the charge air system, which results in the potential requirement to ease replacement of damaged components of the charge air system. As a result, new configurations for medium speed internal combustion engines are disclosed that may improve accessibility of those components being affected by EGR and, in particular, allow the implementation of those affected components as replacement parts.

To reduce the affects of EGR, it was further realized that removing aggressive condensate may extend the lifetime of the affected components and that in particular a drainage system may be provided for the charge air guide elements.

Specifically, a charge air inlet manifold may be composed of modularized casted charge air guide elements each of which specifically interact with a respective water ring element. As the water ring element may need to be more often demounted for servicing the cylinder unit, a charge air guide element is proposed that may allow supplying cooling water to the water ring element and that may stay mounted while servicing the cylinder unit.

Moreover, it was realized that specific design choices allow applying the charge air guide elements for in-line engine configurations as well as V-configurations. Specifically, features such as mounts, cooling water drainage, and condensation drainage may be provided for various engine configurations such as in-line and V-configurations, resulting in an improved efficiency in design work and logistic of replacement parts.

In addition, the present disclosure discloses a mixing pipe for connecting a turbocharged system with an inlet manifold for implementing EGR in a compact manner.

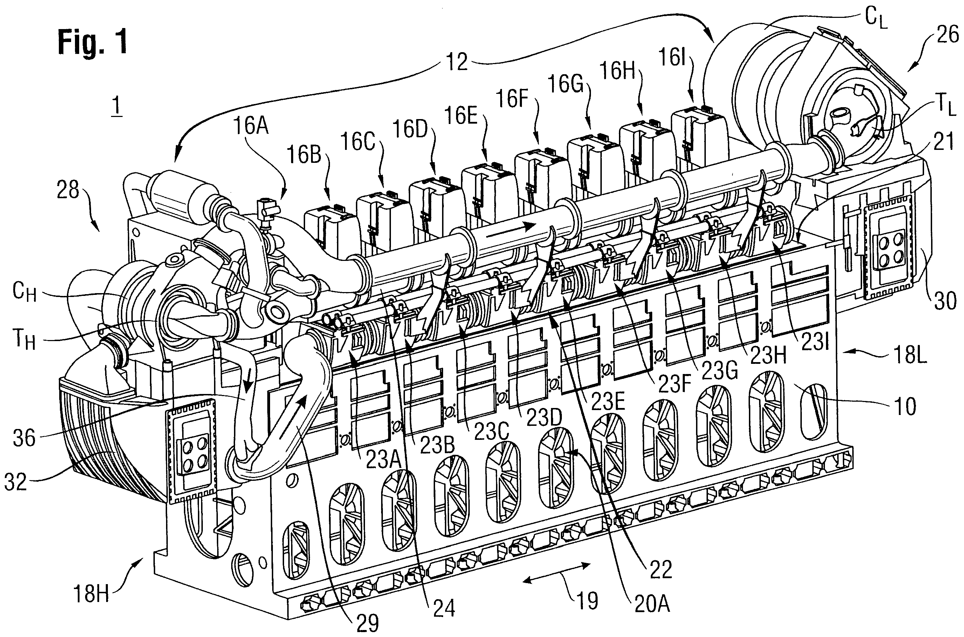

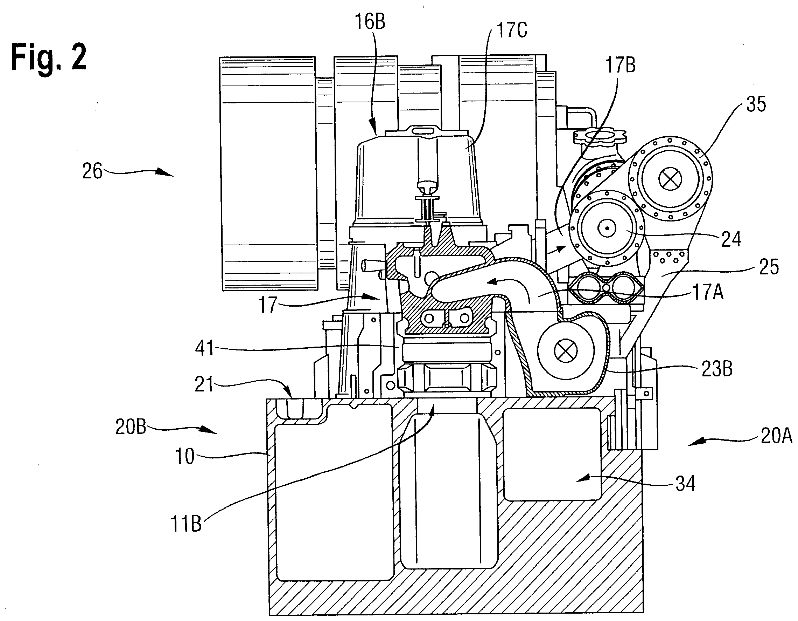

Referring to Figs. 1 and 2, an internal combustion engine 1 may comprise several cylinder units 16A-16I arranged in-line. As an example, Fig. 1 shows nine cylinder units. Internal combustion engine 1 may comprise an engine block 10 housing the crankshaft and providing support for cylinder units 16A-16I being mounted thereon and reaching through cylinder openings at a top side 21 of engine block 10 into the inside of engine block 10. Cylinder opening 11B is shown in Fig. 2.

Internal combustion engine 1 may further comprise a two-stage turbocharged system 12 having a low-pressure stage turbocharger 26 and a high-pressure stage turbocharger 28, which form a sequential turbocharging system. Generally, turbochargers may be applied to use the heat and pressure of the exhaust gas of an engine to drive a compressor for compressing the charge air for the engine. Internal combustion engine 1 may further comprise a fuel tank, one ore more catalyst systems, and an engine control unit, which are not shown.

Cylinder units 16A-16I may each comprise a cylinder head part 17, a combustion chamber, and a cylinder associated for guiding a piston within a cylinder liner. The piston may be connected to the crankshaft. As indicated in Fig. 2A, a cover 17C may cover and protect the top of cylinder head part 17 as well as mechanical parts and fluid connection parts being arranged thereon. Internal components of cylinder units 16A-16I are not shown in detail.

In addition to top side 21, engine block 10 may have end sides 18L and 18H, being opposite in a lengthwise direction 19 defined by the longitudinal arrangement of cylinder units 16A-16I. Engine block 10 may further have opposing long sides 20A, 20B being opposite in a direction orthogonal to lengthwise direction 19. Cylinder units 16A-16I may linearly be arranged between end sides 18L und 18H and parallel to long sides 20A, 20B.

Internal combustion engine 1 may comprise a charge air system, which includes, for example, an intake manifold 22, and an exhaust gas system, which includes, for example, an exhaust manifold 24. For EGR, a fluid connection 36 between the exhaust gas system and the charge air system may be provided such that in a controlled manner exhaust gas can be mixed with the charge air before charging the combustion chamber. In Fig. 1, fluid connection 36 may leak into a mixing pipe 29 that may be provided before the charge air enters intake manifold 22. Moreover, there may be an inlet for adding an additive (for example water) to the pre-compressed charge air within the charge air system.

Intake manifold 22 may extend on top of top side 21 in lengthwise direction 19 and may be fluidly connected to each of cylinder units 16A-16I. Accordingly, top side 21 may be configured for mounting charge air inlet manifold 22, specifically, its components as explained below, thereon. Top side 21 may be free of any charge air openings that would provide a fluid connection from a fluid charge air passage 34 within the engine block to intake manifold 22.

Intake manifold 22 may be connected to high-pressure turbocharger 28 via mixing pipe 29 and to inlet openings of cylinder units 16A-161. Each of cylinder units 16A-16I may be provided with at least one inlet valve (not shown) configured to open or close the fluid connection between intake manifold 22 and the combustion chamber of the respective cylinder unit.

Intake manifold 22 is separate from engine block 10 and may be comprised of a sequence of separately configured charge air guide elements 23A-231 that are mounted at top side 21. For example, top side 21 may comprise screw holes for mounting the charge air guide elements 23A-23I thereon. As disclosed below, some of those screw holes may extend orthogonally into top side 21, while some screw holes may extend into engine block under an angle unequal 90° with respect to top side 21.

Charge air guide elements 23A-23I may be configured as separate parts to allow piecewise assembly of individual cylinder units. Moreover, the specific configuration described herein may allow servicing a cylinder unit such as cylinder liner, piston, valves, etc. without removing the respective charge air guide element.

As shown in Fig. 2, exhaust manifold 24 may be provided above intake manifold 22. For example, sections of exhaust manifold 24 may be attached to charge air elements by schematically indicated mounts 25. Exhaust manifold 24, for example, each section, may be fluidly connected to each of cylinder units 16A-16I. Each of cylinder units 16A-16I may include an exhaust valve (not shown) configured to open and close the fluid connection between the combustion chamber of a respective cylinder unit 16A-16I and exhaust manifold 24.

Generally, when internal combustion engine 1 is operated, combustion chambers may be charged with charge air provided via intake manifold 22. After combustion, exhaust gas generated by the combustion process may be released from cylinder units 16A-16I via exhaust manifold 24.

As shown in Fig. 1, low-pressure stage turbocharger 26 may comprise a compressor C_{L} and a turbine T_{L} that are mechanically connected via a common shaft. Similarly, high-pressure stage turbocharger 28 may comprise a compressor C_{H} and a turbine T_{H} that are connected via a common shaft. An inlet of compressor C_{L} may be configured to suck in charge air for the combustion process. Generally, an outlet of compressor C_{L} may be fluidly connected via a compressor connection 34 with an inlet of compressor C_{H}.

At end side 18L (also referred to as low-pressure side), low-pressure stage turbocharger 26 may be fixedly attached to engine block 10, for example directly or as a unit in combination with other components such as a charge air coolant block, for example a first cooler 30 etc.

At end side 18H (also referred to as high-pressure side), high-pressure stage turbocharger 28 may be fixedly attached to engine block 10, for example directly or as a unit in combination with other components such as a charge air coolant block, for example a second cooler 32 etc.

By mounting the turbochargers 26, 28 at opposite sides of engine block 10, mounting may be simplified and space may be used effectively, while providing easy access to the engine's components from long sides 20A, 20B and from the top.

Compressor connection 34 may provide a passage from end side 18L to end side 18H within the one-piece casted engine block 10 but is otherwise closed air tight. As shown in Fig. 2, compressor connection 34 may be a duct system integrated into casted engine block 10, which may be configured to withstand a charge air pressure of at least 3, 4, or 5 bar. In the case of a medium speed large internal combustion engine, compressor connection 34 may have a length of several meters, for example 5 m.

The outlet of compressor C_{L} may be connected via first cooler 30 to compressor connection 34. An outlet of compressor C_{H} may be connected via second cooler 32 and mixing pipe 29 with intake manifold 22.

During operation of engine 1, the charge air may be twice compressed and cooled before charging of the combustion chambers of cylinder units 16A-16I. For example, for medium speed large internal combustion engines, compressor C_{L} may compress the charge air to 3-5 bar at 180°C. Cooler 30 may cool the charge air from about 180°C to 45°C. Compressor C_{H} may compress the charge air to 7-8 bar at 180°C and cooler 32 may cool the charge air from about 180°C to 45°C.

The cooling may result in condensation within the charge air system and its components. In particular with EGR or various types of fuels, the condensate may become chemically reactive and, in particular, may affect the wall structure of the charge air systems in regions where a condensate may accumulate. As disclosed herein, the charge air guide elements may be provided with specific drainage ports to remove the aggressive condensate from the charge air system.

Within the combustion chambers, further compression of the charge air may be caused through the movement of the pistons. At the end of the compression cycle, an appropriate amount of fuel such as diesel oil, marine diesel oil, heavy fuel oil, alternative fuels, or a mixture thereof, may be injected into the combustion chambers. The fuel may be combusted with the compressed charged air and produce exhaust gas, which may be discharged via exhaust manifold 24.

An outlet of exhaust manifold 24 may be connected to an inlet of turbine T_{H}. An outlet of turbine T_{H} may be fluidly connected with an inlet of turbine T_{L} via turbine pipe connection 35 and an outlet of turbine T_{L} may release the exhaust gas. The exhaust gas system may additionally comprise one or more catalyst systems and/or one or more exhaust gas filtering systems that may be arranged, for example, externally or within turbine pipe connection 35.

The above described operation of internal combustion engine 1 may provide power to turn the crankshaft, for example, to drive a generator.

Referring to Fig. 1, intake manifold 22 may be provided externally to engine block 10 and may be made of a sequence of charge air guide elements 23A-23I for guiding charge air from high-pressure stage turbocharger 28 to each of cylinder units 16A-16I. Charge air guide elements 23A-23I may be made as cast parts that are mounted on top of engine block 10 with, for example, four screws. Neighbouring charge air guide elements may be fluidly connected via plain conduits to distribute the charge air, supplied to a first one of the charge air guide elements 23A-23I to downstream positioned charge air guide elements.

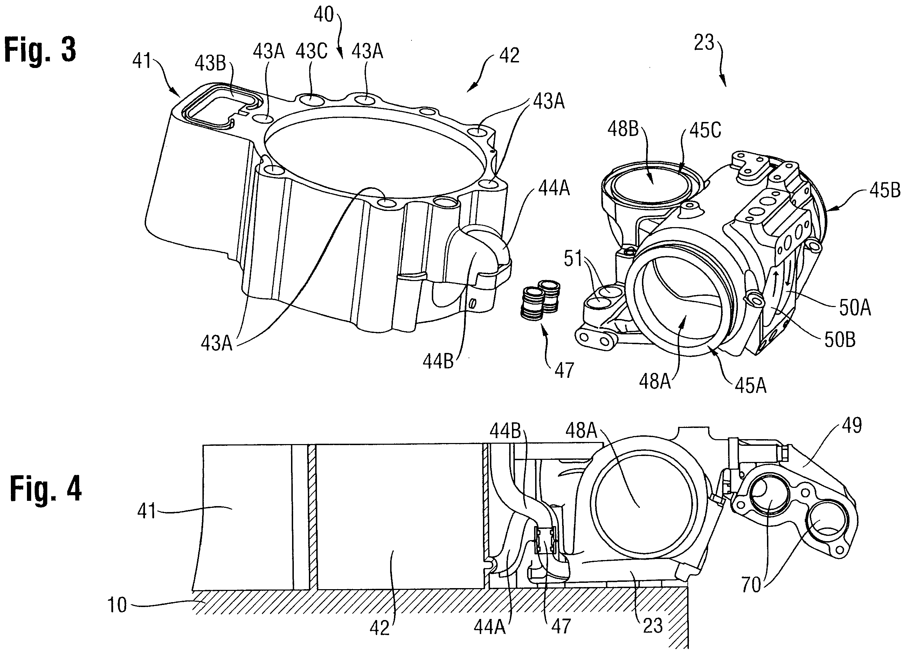

Figs. 3 and 4 illustrate a charge air guide element 23 and its interaction with a water ring element 40. Specifically, Fig. 3 shows a perspective view of an exemplary charge air guide element 23 for mounting together with a water ring element 40 onto engine block 10 in a not-assembled state. In a cut view, Fig. 4 shows then charge air guide element 23 and water ring element 40 mounted to engine block 10. Charge air guide element 23 and water ring element 40 may each be made as a cast part.

Water ring element 40 may comprise a valve drive feed trough section 41 and a water ring section 42 for providing cooling water to the cylinder liner of the respective cylinder unit. Valve drive feed trough section 40 may comprise an opening 43B for having drive stems for operating the valves extending there through. Water ring element 40 may be the basis for mounting cylinder head part 17 thereon. A control air through hole 43C may further be integrated in the wall structure of water ring element 40 to provide pressurized control air to cylinder head part 17.

Water ring element 40 may comprise six screw guiding holes 43A that are arranged around water ring section 42 and extend within its wall structure, for example, in direction of the cylinder axis. For each cylinder unit 16A-16I, top side 21 of engine block 10 may have six tap holes surrounding a piston opening. Mounting water ring element 40 together with the respective cylinder unit (not shown in Fig. 4) onto top side 21 of engine block 10 may be done, for example, using screws passing through the screw guiding holes 43A.

In in-line configuration, top side 21 of engine block 10 may comprise a series of piston openings linearly arranged in the direction from first end side 18L to second end side 18H, while in V-configuration, the top side may include, for each of the two cylinder banks, a top section that is tilted with respect to the other and comprises a series of piston openings linearly arranged.

In the mounted state, a cylinder liner may reach from a respective cylinder head part 17 through the respective water ring section 42 and further through top side 21 into engine block 10.

Water ring section 42 may be configured for guiding coolant (for example, cooling water of a high temperature cooling circuit of the engine) around the cylinder liner and towards cylinder head 17 for cooling the cylinder liner and cylinder head during operation of the engine. In the mounted state, water ring section 42 may surround the respective cylinder liner such that a gap exists between water ring section 42 and the cylinder liner, which forms a water path around the cylinder liner.

Water ring element 40 may comprise cooling water connections for receiving cooling water from and returning cooling water to charge air guide element 23. As shown in Fig. 4, a supply connection 44A may extend through the wall structure of water ring section 42. Supply connection 44A may be formed at an outside of the wall structure in a tab-like structure such that a water inlet opening is formed to open towards the engine block side of water ring 40.

The cooling water, which circulated around the cylinder liner and was guided upwards into the cylinder head, may be returned from the cylinder head into a return connection 44B. Return connection 44B may comprise a channel 44C extending within the wall structure, for example, in direction of the cylinder axis. Return connection 44B may form, at an outside of the wall structure, a tab-like structure such that a water outlet opening is formed to open towards the engine block side of water ring 40. The tab-like structure of return connection 44B may be positioned next to the tab-like structure of supply connection 44A.

As the water connections are directed downwards towards the engine block side of water ring 40, they may be connectable, for example, via sealing inserts 47 to counterpart water connections of cooling water channels of charge air guide element 23 described below.

Charge air guide element 23 may comprise an air channel system inside. Specifically, charge air guide element 23 may comprise an inlet opening 45A on a first side of charge air guide element 23, a first outlet opening 45B at a second side being opposite to the first side, thereby providing a fluid connection (first passage 48A) from the first side to the second side (specifically, to first outlet opening 45B) in lengthwise direction 19 when mounted on top side 21.

As illustrated above with reference to Fig. 1, neighbouring charge air guide systems 23A-23I may be fluidly connected, thereby linearly extending the fluid connections of the sequence of charge air guide elements 23A-23I and form intake manifold 22.

Referring again to Fig. 3, each charge air guide element 23 may further comprise a second outlet opening 45C that may be fluidly connected to first passage 48A, thereby providing a fluid connection (second passage 48B) from the first side to the second outlet opening 45C. Second outlet opening 45C may be positioned at a water ring side of charge air guide element 23 and may be configured for providing a charge air connection to a charge air inlet of the respective cylinder unit.

Referring to Fig. 2, cylinder head part 17 may comprise a first tube-like extension 17A and a second tube-like extension 17B. First tube-like extension 17A may form the charge air inlet of the cylinder unit and connect to second outlet opening 45C of the respective charge air guide element 23. Second tube-like extension 17B may form the exhaust gas outlet of cylinder head part 17 and connect to exhaust manifold 24.

Integrated in its wall structure, charge air guide element 23 may comprise cooling water channels for fluidly connecting cooling water pipes 70 (shown in Fig. 4) of a cooling system with the cooling water connections of water ring element 40. Specifically, in the mounted state, a supply channel 50A may fluidly connect the supply pipe with the water inlet opening of supply connection 44A and a return channel 50B may fluidly connect the return pipe with the water outlet opening of return connection 44B.

Supply channel 50A and return channel 50B may extend within the wall structure of charge air guide element 23. At the water ring side, supply channel 50A and return channel 50B may each comprise an opening 52 opening in the same direction as opening 45C (in the mounted state in a direction away from engine block 10) such that, for example, when sealing inserts 47 are positioned within openings 51, water ring element 40 may be lowered onto engine block 10 and a water tight connection between supply connection 44A and supply channel 50A as well as between return connection 44B and return channel 50B may be established. Similarly, water ring element 40 may be removed without demounting charge air guide element 23.

Within the wall structure of charge air guide element 23, supply channel 50A and return channel 50B may extend for about 180° around passage 48A, at first along the engine block side and then along an access side (opposite to the water ring side).

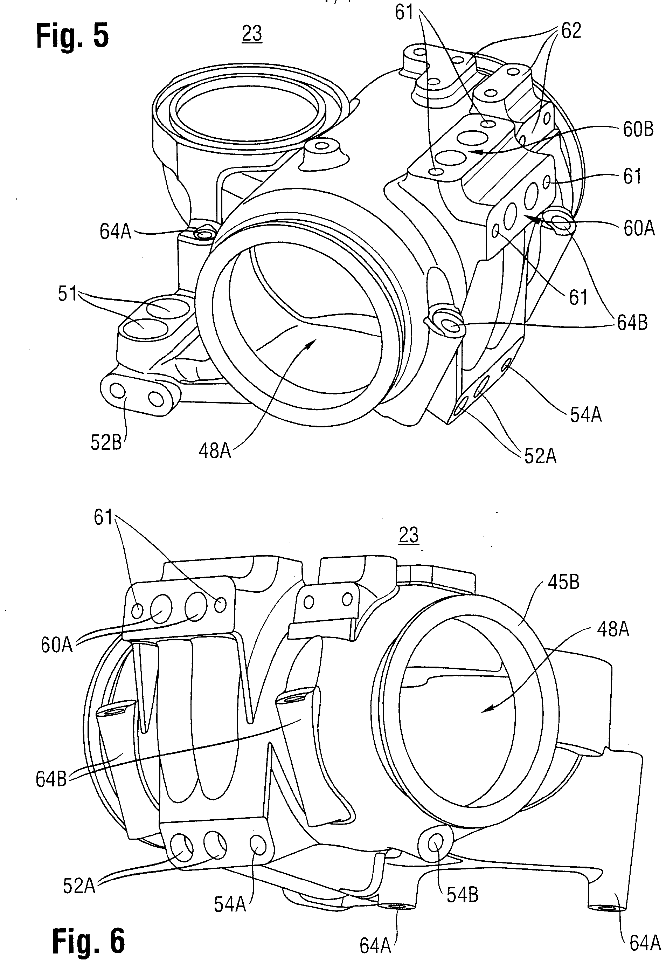

At the upper portion of the access side, there may be provided two pairs of openings for establishing a fluid connection to cooling water pipes. The openings may open in a direction that allows access in dependence of the type of engine configuration. For example, one pair of openings for in-line configuration may open in direction away from the engine in horizontal direction and one pair of openings for V-configuration may open in direction away from the engine in vertical direction as explained in detail with reference to Figs. 5 and 6.

For each pair, the openings may be positioned next to each other in axial direction of passage 48A, in the mounted state along length direction 19.

As shown in Fig. 5, openings 60A for in-line configuration may open at the access side, while openings 60B for V-configuration may open at the top side of charge air guide element 23. Tap holes 61 may be provided at both sides of the pairs for attaching a connecting pipe element 49 for connecting to cooling water pipes 70 as shown in Fig. 4.

Next to the two pairs of openings, a mounting surface 62 with tab holes 61 may be provided for mounting a holder such as holder 25 in Fig. 2 to hold exhaust manifold 24.

Referring to Figs. 5 and 6, the cooling water channels of charge air guide element 23 may further comprise cooling water drainage ports, for example, cooling water drainage ports 52A in a central part of the cooling water channels and cooling water drainage ports 52B at the water ring side opening, for example, in a direction into which opening 45A opens. As understood by the skilled person, cooling water drainage ports 52A, 52B may be closed directly at charge air guide element 23 to close the cooling circuit during operation. Alternatively, the closing may be performed at some distance when a drainage pipe is connected to cooling water drainage ports 52A, 52B.

Cooling water drainage ports 52A may further allow curing the cooling water channels after the casting. For example, the cooling water channels may be casted to have two sections extending essentially linearly from the cooling water drainage ports 52A.

In some embodiments, condensate drainage ports may be provided to fluidly connect first passage 48A with the outside at positions in which condensate may accumulate during operation. For example, condensate a drainage port 54A may be positioned next to cooling water drainage ports 52B and connect to the inside for removing condensate when charge air guide element 23 is mounted at an in-line configured engine. For V-configuration, a condensate drainage port 54B may be positioned below openings 45B and connect to the inside for removing condensate when charge air guide element 23 is mounted at a V-configured engine (see Fig. 6).

Charge air guide element 23 may be mounted via four screws inserted into screw guiding holes. For example, charge air guide element 23 may comprise at the water ring side, two screw guiding holes 64A that are directed essentially orthogonally towards the engine block side. Charge air guide element 23 may further comprise two screw guiding holes 64B at the access side, which may be positioned under an angle with respect to screw guiding holes 64A. Respective tap holes extending orthogonal to top side 21 and an angle of, for example, 70° to top side 21 may be provided in engine block 10.

The angle may be selected in accordance with the V-configuration for which the charge air guide element may be used. For example, V-configuration with two cylinder banks may be characterized by the tilt angle between the bank sections of the engine block top side. In some embodiments, a horizontal transition side 21A may connect the bank sections.

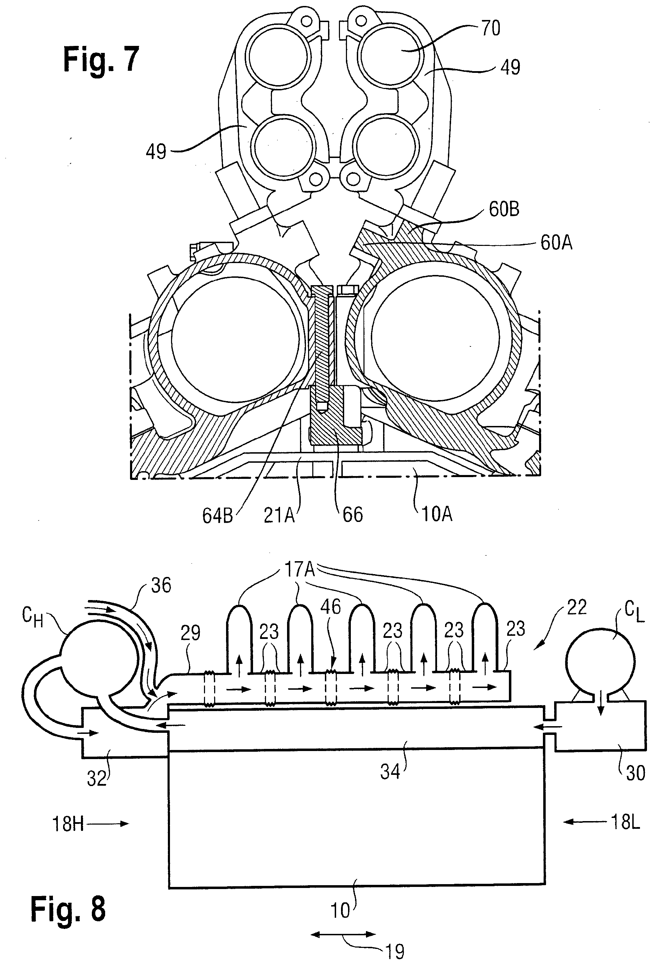

When a charge air guide element 23 is mounted to an engine in V-configuration, screw guiding holes 64A may be orthogonally directed onto each bank section (not shown in Fig. 7) and screw guiding holes 64B may be orthogonally directed onto horizontal transition section 21A of V-engine block 10A.

As exemplarily shown in Fig. 7, a block 66 may be attached, for example screwed, to horizontal transition side 21A to bridge the space between screw guiding holes 64B and engine block 10A. The angled orientation of screw guiding holes 64A and screw guiding holes 64B may allow accessing the screws when using charge air guide element 23 with in-line and V-configured engines.

The outer shapes of water ring 40 and charge air guide element 23 may be configured such that water ring 40 may be removed and mounted without the need of demounting charge air guide element 23 for in-line and V-configurations.

As an example, Fig. 8 illustrates schematically the flow of charge air in an charge air system. From compressor C_{L}, which may suck in charge air from the outside, charge air may pass cooler 30 and compressor connection 34 before being further compressed by compressor C_{H}. From compressor C_{H}, charge air may pass cooler 32 and mixing pipe 29 before being distributed by intake manifold 22 to the cylinder units. Intake manifold 22 may be composed of charge air guide elements 23. Specifically, charge air guide elements 23 may be connected to respective charge air inlets 17A of cylinder head parts of cylinder units 16A-16I.

Mixing pipe 29 may be fluidly connected via a valve (not shown) with fluid connection 36 for connecting the charge air system with the exhaust gas system. Thereby, exhaust gas may be mixed with charge air in a controlled manner before being distributed to the combustion chambers via inlet manifold 22.

Mixing pipe 29 may also comprise a condensate drainage located at the lowest point when mounted between high pressure cooler 32 and intake manifold 22.

In general, the various drainage ports may be connected to a common drainage system ensuring proper draining under various operating conditions that occur, for example, in marine applications.

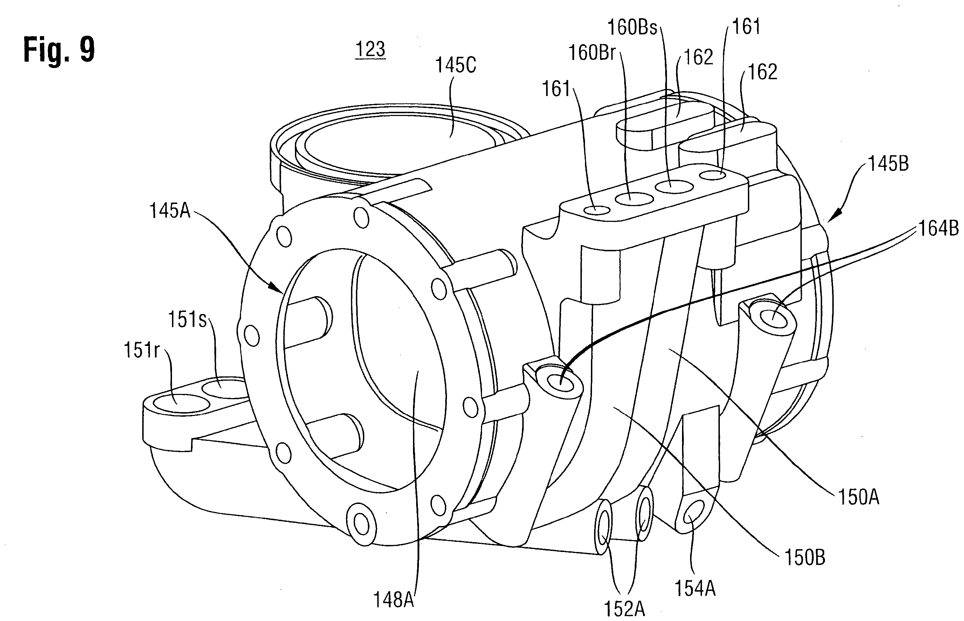

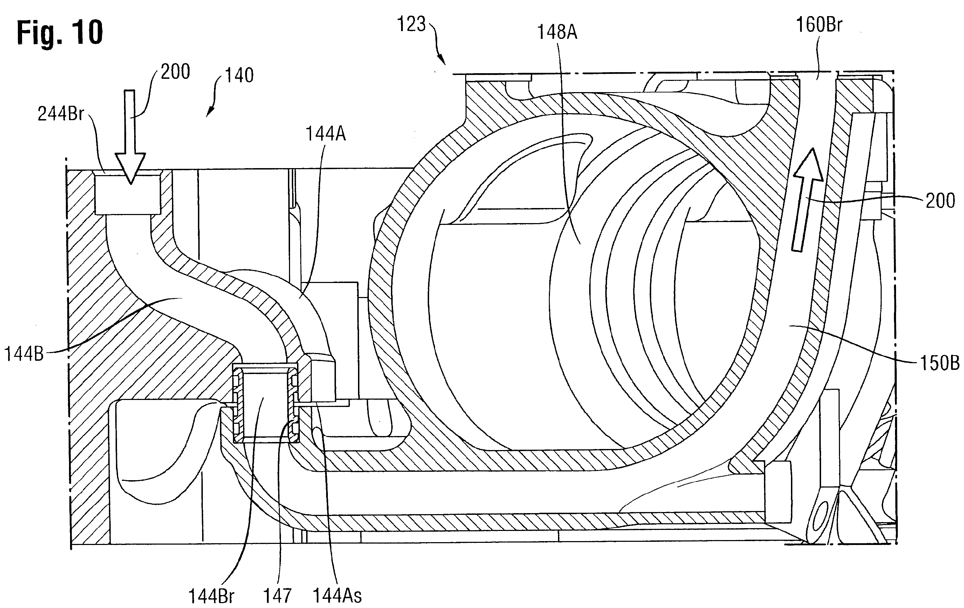

Figs. 9 and 10 illustrate an alternative embodiment of a charge air guide element 123 and its interaction with a water ring element 140. Specifically, Fig. 9 shows a perspective view of charge air guide element 123 and Fig. 10 illustrates the coolant flow in a cut view through the mounted state of charge air guide element 123 and water ring element 140. In the following not all features will be described in detail. However, the skilled person will understood in connection with the first embodiment that features of the various embodiments may be similarly applied to the other embodiment, such as charge air guide element 123 and water ring element 140 may each be made as a cast part and drainage ports for the cooling system as well as the air system may be provided and using clamped or bolted flanges.

Charge air guide element 123 comprises an air channel system inside. Specifically, charge air guide element 123 comprises an inlet opening 145A on a first side of charge air guide element 123, a first outlet opening 145B at a second side being opposite to the first side, thereby providing a fluid connection (first passage 148A) from the first side to the second side (specifically, to first outlet opening 145B) in lengthwise direction 19 when mounted on the top side of an engine block.

As illustrated above with reference to Fig. 1, neighbouring charge air guide systems may be fluidly connected, thereby linearly extending the fluid connections of the sequence of charge air guide elements and form intake manifold 22. In the embodiment of Fig. 9, a bolted flange configuration is indicated by screw threads in contrast to the clamp configuration of Fig. 3.

Referring again to Fig. 9, each charge air guide element 123 further comprises a second outlet opening 145C fluidly connected to first passage 148A, thereby providing a fluid connection (second passage 48B) from the first side to second outlet opening 145C respectively mounted to each cylinder unit. As shown in Fig. 10, second outlet opening 145C is positioned at a water ring side of charge air guide element 123.

Integrated in its wall structure, charge air guide element 123 comprises a pair of cooling water channels connected to a connecting pipe element 49 (shown in Fig. 4) for fluidly connecting cooling water pipes 70 (shown in Fig. 4) with the cooling water connections of water ring element 140.

Specifically, in the mounted state, a supply channel 150A extends from an supply inlet opening 160Bs to a supply outlet opening 151s and a return channel 150B extends from a return inlet opening 151r to a return outlet opening 160Br. Supply inlet opening 160Bs, supply outlet opening 151s, return inlet opening 151r, and return outlet opening 160Br open essentially in the direction into which the second passage 148B of the supply section opens at the top side of charge air guide element 123. The essentially identical orientation of supply inlet opening 160Bs, supply outlet opening 151s, return inlet opening 151r, return outlet opening 160Br, and second outlet opening 145C simplifies the assembly and demounting of water ring element 140 and charge air guide element 123 as well as the providing of a simple cooling water circuit to and from the cooling water pipes.

In other words, supply channel 150A fluidly connects the cooling water pipe with a water inlet opening 144As of supply connection 144A, for example, configured in a tap-like manner and a return channel 150B fluidly connects the return pipe with a water outlet opening 144Br of return connection 144B.

Supply channel 150A and return channel 150B extend within the wall structure of charge air guide element 123. Within the wall structure of charge air guide element 123, supply channel 150A and return channel 150B may extend for about 180° around passage 148A, at first along the engine block side and then along an access side (which is opposite to the water ring side).

In contrast to the embodiment of Fig. 3, only one pair of openings 160Bs, 160Br for in-line configuration and V-configuration open in direction away from the engine in horizontal direction, thereby further simplifying the cooling channel system, for example, open at the top side of charge air guide element 123. Further mounting surfaces 162 are provided for mounting a holder to hold, for example, an exhaust manifold.

Cooling water channels 150A and 15B of charge air guide element 123 may further comprise cooling water drainage ports, for example, cooling water drainage ports 152A in a central part of the cooling water channels and cooling water drainage ports (not shown) at the water ring side opening, for example, in a direction into which opening 145A opens. As understood by the skilled person, the cooling water drainage ports can be sealed to close the cooling circuit during operation.

In some embodiments, condensate drainage ports may be provided to fluidly connect first passage 148A with the outside at positions in which condensate may accumulate during operation. For example, a condensate drainage port 154A next to cooling water drainage ports 152A connects to the inside for removing condensate when charge air guide element 123 is mounted at an in-line configured engine. For V-configuration, a condensate drainage port may be provided as disclosed in connection with Fig. 6.

It is referred to Figs. 6 and 7 and the respective description also for the screw guiding holes that are directed essentially orthogonally towards the engine block side and screw guiding holes 164B at the access side, which may be positioned under an angle with respect to screw guiding holes.

The outer shapes of water ring element 140 and charge air guide element 123 may be configured such that water ring element 140 may be removed and mounted without the need of demounting charge air guide element 123 for in-line and V-configurations.

Referring to Fig. 10, exemplarily the return path of the cooling water from the cylinder unit to the water pipes is illustrated.

From the cylinder head (not shown), the cooling water enters a cooling water return conduit 144B through an return conduit opening 244Br at the top of water ring element 140. The top is configured as, for example, a cylinder head interface. Cooling water return conduit 144B extends essentially axially along the wall of water ring element 140 and forms a tab-like structure that comprises water outlet opening 144Br. A sealed connection to return channel 150B is provided by a sealing insert 147 fitted into return conduit opening 244Br and return inlet opening 151r. Return channel 150B extends at the bottom of charge air element 123 from the water ring side to the access side and then bends upwards to the top side of charge air element 123 to open into return outlet opening 160Br. Prior bending towards return outlet opening 160Br, a, for example, straight connection to cooling water drainage port 152A is provided. The return flow is indicated by arrows 200.

The cooling water supply is essentially configured in a similar manner, with the differenc, that supply connection 144A opens into the inside of water ring element 140.

### Industrial Applicability

Herein, the term "internal combustion engine" may refer to internal combustion engines which may be used as main or auxiliary engines of stationary power providing systems such as power plants for production of heat and/or electricity as well as in ships/vessels such as cruiser liners, cargo ships, container ships, and tankers. Fuels for internal combustion engines may include diesel oil, marine diesel oil, heavy fuel oil, alternative fuels or a mixture thereof, and natural gas.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines.

Examples of internal combustion engines for the herein disclosed configuration of a two-stage turbocharged system include medium speed internal combustion diesel engines, like inline and V-type engines of the series M20, M25, M32, M43 manufactured by Caterpillar Motoren GmbH & Co. KG, Kiel, Germany, operated in a range of 500 to 1000 rpm.

Medium speed internal combustion engines may be large standalone engines that therefore provide reasonable access to the end sides of the engine block.

Herein a fluid connection generally may correspond to a component providing a fluid connection, for example, via an internal pathway having at least two openings connected by a side wall, such as for example a pipe. Components providing fluid pathways of the charge air system and the exhaust gas system may be connected with each other, for example, by flange connections as indicated in some of the figures.

In some embodiments, neighbouring charge air guide elements may be fluidly connected via a conduct, for example, a plain conduits or bellow.

Moreover, the mounting aspect and the aspect of the cooling channel system are independently of each other addable to charge air guiding elements.

The design of the charge air guide elements and water ring elements as disclosed herein may be applicable to single or multistage turbocharged engines.

Moreover, the charge air guide element may comprise each of the aspect of cooling channels integrated in its wall structure and the aspect of the mounting using angled mounting channels separately or in combination.

Although the preferred embodiments of this invention have been described herein, improvements and modifications may be incorporated without departing from the scope of the following claims.

## Claims

1. A charge air guide element (23) for an intake manifold (22) of an internal combustion engine (1) with a plurality of cylinder units (16A-161), the charge air guide element (23) comprising:
a through flow section comprising a first passage (48A) fluidly connecting a front side of the charge air guide element (23) with a back side of the charge air guide element (23);
a supply section at a cylinder unit side of the through flow section, the supply section comprising a second passage (48B) fluidly connecting a top side of the charge air guide element (23) with the first passage (48A); **characterised in that**,
integrated into a wall structure of the charge air guide element (23), a cooling water channel system comprises at least one opening at the cylinder unit side of the through flow section, which opens towards the top side of the charge air guide element (23), and at least one opening at an access side of the charge air guide element (23), the access side being opposite to the cylinder unit side.

2. The charge air guide element (23) of claim 1, wherein the cooling water channel system comprises a supply channel (44A) and a return channel (44B), each having an opening at the cylinder unit side of the through flow section, which opens essentially in the direction into which the second passage (48B) of the supply section opens at the top side.

3. The charge air guide element (23) of claim 1 or claim 2, wherein the cooling water channel system further comprises a cooling water drainage port (52A) in a central part of the at least one cooling water channel and/or a cooling water drainage port (52B) close to the at least one opening at the cylinder unit side.

4. The charge air guide element (23) of any one of the preceding claims, further comprising a condensate drainage port (54A, 54B) fluidly connecting the first passage (48A) with the outside at a position in which condensate accumulates during operation.

5. The charge air guide element (23) of claim 4, wherein an in-line condensate drainage port (54A) is positioned next to a cooling water drainage port in a central part of the at least one cooling water channel and/or a V-configuration condensate drainage port (54B) is positioned below a first outlet opening (45B) of the first passage (48A).

6. The charge air guide element (23) of any one of the preceding claims, further comprising a first screw guiding hole (64A) at the water ring side that is directed essentially orthogonally towards the engine block side and a second screw guiding hole (64B) at the access side, which runs under an angle with respect to the first screw guiding hole (64A).

7. The charge air guide element (23) of any one of the preceding claims, wherein the through flow section comprises an inlet opening (45A) at the front side of the charge air guide element (23), a first outlet opening (45B) at the back side of the charge air guide element (23) opposite to the front side, and the first passage (48A) is formed within the through flow section and fluidly connects the inlet opening (45A) with the first outlet opening (45B), and/or the supply section comprising a second outlet opening (45C) at the top side of the charge air guide element (23) and the second passage (48B) is formed within the supply section and fluidly connects the second outlet opening (45C) with the first passage (48A).

8. The charge air guide element (23) of any one of the preceding claims, wherein the cooling water channel system comprises
a supply channel (44A) having a supply inlet opening (60B) at the access side of the through flow section and a supply outlet opening (51) at the cylinder unit side of the through flow section,
a return channel (44B) having a return inlet opening (51) at the cylinder unit side of the through flow section and a return outlet opening (60B) at the access side of the through flow section, and
wherein the supply inlet opening (60B), the supply outlet opening (51), the return inlet opening (51), and the return outlet opening (60B) open essentially in the direction into which the second passage (48B) of the supply section opens at the top side.

9. The charge air guide element (23) of claim 8, wherein the supply inlet opening (60B), the supply outlet opening (51), the return inlet opening (51), and the return outlet opening (60B) are oriented such that a cooling system of a water ring element (40) is mountable from the same side onto the supply outlet opening (51) and the return inlet opening (51) as a connecting pipe element (49) is mountable onto the supply inlet opening (60B) and the return outlet opening (60B).

10. An internal combustion engine (1) comprising:
an engine block (10) with a top side (21), a first end side (18L), and a second end side (18H), the second end side (18H) opposing the first end side (18H);
a plurality of cylinder units (16A-16I) mounted at the top side (21) and having cylinder liners reaching into the engine block (10);
a charge air system comprising an inlet manifold (22) for distributing charge air to each of the plurality of cylinder units (16A-16I), wherein the inlet manifold (22) comprises a plurality of charge air guide elements (23A-23I) according to any one of claim 1 to claim 9 mounted at the top side (21); and
a plurality of water ring elements (40), each comprising
a cylinder liner section (42) with a wall structure surrounding a through hole to provide a passage for a respective cylinder liner in a mounted state of the water ring element (40); and
a cooling system for cooling the cylinder liner in the mounted state of the water ring element (40), the cooling system having a conduit structure with at least one opening at an outside of the wall structure that opens towards the engine block side of the water ring element (40),
and each mounted at the top side (21) such that the at least one opening of the cooling system of each water ring element (40) and the at least one opening of the cooling water channel system of the respective charge air element (23) are fluidly connected.

11. The internal combustion engine (1) of claim 10, wherein the second outlet opening (45C) of each of the plurality of charge air guide elements (23A-23I) is fluidly connected to a charge air inlet (17A) of the respective cylinder head part (17), and/or
wherein a direction of the first passage (48A) is essentially oriented orthogonally to the direction of the passage through the water ring section (42) of the water ring element (41).

12. The internal combustion engine (1) of any one of claim 10 or claim 11, wherein the top side (23) of the engine block (10) comprises a first section for a first cylinder bank, a second section for a second cylinder bank, and a horizontal transition section (21A), the first section and second section are inclined with respect to each other to provide for a V-configuration of the internal combustion engine (1) and the first screw guiding hole (64A) of a charge air guide element (23) of the first cylinder bank extends orthogonal to the first section and the second screw guiding hole (64B) extends orthogonal to the horizontal transition section (21A).

13. The internal combustion engine (1) of any one of claim 10 to claim 12, wherein at least one of the engine block (10), the charge air guide element (23), and the water ring element (40) is a one-piece casted component.

14. The internal combustion engine (1) of any one of claim 10 to 13, wherein the cooling system comprises
a cooling water supply conduit (44A) extending through the wall structure of the water ring element (40) and configured to, in the mounted state of the water ring element (40), supply cooling water to a cooling chamber formed between the respective cylinder liner and the wall structure, and
a cooling water return conduit (44B) configured to, in the mounted state of the water ring element (40), return cooling water,
wherein the cooling water supply conduit (44A) and the cooling water return conduit (44B) each comprise an opening at an outside of the wall structure of the water ring element (40) that open towards the engine block side of the water ring element (40), and
wherein in particular the openings at the outside of the wall structure of the water ring element (40) are provided by a tap structure extending from the outside of the wall structure.

15. The internal combustion engine (1) of any one of claim 10 to claim 14, wherein the cooling water return conduit (44B) comprises a channel within the wall structure of the water ring element (40) with an opening at a cylinder head interface.

## Patentansprüche

1. Ladeluftführungselement (23) für einen Ansaugkrümmer (22) eines Verbrennungsmotors (1), der eine Vielzahl von Zylindereinheiten (16A-16I) aufweist, wobei das Ladeluftführungselement (23) umfasst:
einen Durchflussabschnitt, der einen ersten Durchlass (48A) umfasst, der eine Vorderseite des Ladeluftführungselements (23) mit einer Rückseite des Ladeluftführungselements (23) fluidisch verbindet;
einen Zuführabschnitt an einer Zylindereinheitsseite des Durchflussabschnitts, wobei der Zuführabschnitt einen zweiten Durchlass (48B) umfasst, der eine Oberseite des Ladeluftführungselements (23) mit dem ersten Durchlass (48A) fluidisch verbindet; **dadurch gekennzeichnet, dass**,
integriert in eine Wandstruktur des Ladeluftführungselements (23), ein Kühlwasserkanalsystem zumindest eine Öffnung an der Zylindereinheitsseite des Durchflussabschnitts, die sich in Richtung zu der Oberseite des Ladeluftführungselements (23) öffnet, und zumindest eine Öffnung an einer Zugangsseite des Ladeluftführungselements (23) umfasst, wobei die Zugangsseite der Zylindereinheitsseite gegenüberliegt.

2. Ladeluftführungselement (23) nach Anspruch 1, wobei das Kühlwasserkanalsystem zumindest einen Zuführkanal (44A) und einen Rückführkanal (44B) umfasst, von denen jeder eine Öffnung an der Zylindereinheitsseite des Durchflussabschnitts aufweist, die sich im Wesentlichen in die Richtung öffnet, in die sich der zweite Durchlass (48B) des Zuführabschnitts an der Oberseite öffnet.

3. Ladeluftführungselement (23) nach Anspruch 1 oder Anspruch 2, wobei das Kühlwasserkanalsystem weiter eine Kühlwasserabflussöffnung (52A) in einem zentralen Teil des zumindest einen Kühlwasserkanals und/oder eine Kühlwasserabflussöffnung (52B) in der Nähe der zumindest einen Öffnung an der Zylindereinheitsseite umfasst.

4. Ladeluftführungselement (23) nach einem der vorstehenden Ansprüche, weiter umfassend eine Kondensatabflussöffnung (54A, 54B), die den ersten Durchlass (48A) an einer Position, an der sich während des Betriebs Kondensat ansammelt, mit der Außenseite fluidisch verbindet.

5. Ladeluftführungselement (23) nach Anspruch 4, wobei eine Inline-Kondensatabflussöffnung (54A) neben einer Kühlwasserabflussöffnung in einem zentralen Teil des zumindest einen Kühlwasserkanals positioniert ist und/oder eine Kondensatabflussöffnung (54B) einer V-Konfiguration unter einer ersten Auslassöffnung (45B) des ersten Durchlasses (48A) positioniert ist.

6. Ladeluftführungselement (23) nach einem der vorstehenden Ansprüche, weiter umfassend ein erstes Schraubenführungsloch (64A) an der Wasserringseite, das im Wesentlichen senkrecht in Richtung zu der Motorblockseite gerichtet ist, und ein zweites Schraubenführungsloch (64B) an der Zugangsseite, das unter einem Winkel in Bezug auf das erste Schraubenführungsloch (64A) verläuft.

7. Ladeluftführungselement (23) nach einem der vorstehenden Ansprüche, wobei der Durchflussabschnitt eine Einlassöffnung (45A) an der Vorderseite des Ladeluftführungselements (23), eine erste Auslassöffnung (45B) an der Rückseite des Ladeluftführungselements (23), gegenüberliegend von der Vorderseite, umfasst und wobei der erste Durchlass (48A) in dem Durchflussabschnitt gebildet ist und die Einlassöffnung (45A) mit der ersten Auslassöffnung (45B) fluidisch verbindet und/oder wobei der Zuführabschnitt eine zweite Auslassöffnung (45C) an der Oberseite des Ladeluftführungselements (23) umfasst und wobei der zweite Durchlass (48B) in dem Zuführabschnitt gebildet ist und die zweite Auslassöffnung (45C) mit dem ersten Durchlass (48A) fluidisch verbindet.

8. Ladeluftführungselement (23) nach einem der vorstehenden Ansprüche, wobei das Kühlwasserkanalsystem umfasst:
einen Zuführkanal (44A) mit einer Zuführeinlassöffnung (60B) an der Zugangsseite des Durchflussabschnitts und einer Zuführauslassöffnung (51) an der Zylindereinheitsseite des Durchflussabschnitts,
einen Rückführkanal (44B) mit einer Rückführeinlassöffnung (51) an der Zylindereinheitsseite des Durchflussabschnitts und einer Rückführauslassöffnung (60B) an der Zugangsseite des Durchflussabschnitts, und
wobei die Zuführeinlassöffnung (60B), die Zuführauslassöffnung (51), die Rückführeinlassöffnung (51) und die Rückführauslassöffnung (60B) sich im Wesentlichen in die Richtung öffnen, in die sich der zweite Durchlass (48B) des Zuführabschnitts an der Oberseite öffnet.

9. Ladeluftführungselement (23) nach Anspruch 8, wobei die Zuführeinlassöffnung (60B), die Zuführauslassöffnung (51), die Rückführeinlassöffnung (51) und die Rückführauslassöffnung (60B) orientiert sind, sodass ein Kühlsystem eines Wasserringelements (40) von der gleichen Seite an der Zuführeauslassöffnung (51) und der Rückführeinlassöffnung (51) montierbar ist, wie ein Verbindungsrohrelement (49), das an der Zuführeinlassöffnung (60B) und der Rückführauslassöffnung (60B) montierbar ist.

10. Verbrennungsmotor (1), umfassend:
einen Motorblock (10) mit einer Oberseite (21), einer ersten Endseite (18L) und einer zweiten Endseite (18H), wobei die zweite Endseite (18H) der ersten Endseite (18H) gegenüberliegt;
eine Vielzahl von Zylindereinheiten (16A-16I), die an der Oberseite (21) montiert sind und Zylinderlaufbuchsen aufweisen, die in den Motorblock (10) hineinreichen;
ein Ladeluftsystem, umfassend einen Einlasskrümmer (22) zum Verteilen von Ladeluft zu jeder von der Vielzahl von Zylindereinheiten (16A-16I), wobei der Einlasskrümmer (22) eine Vielzahl von Ladeluftführungselementen (23A-23I) nach einem von Anspruch 1 bis Anspruch 9 umfasst, die an einer Oberseite (21) montiert sind; und
eine Vielzahl von Wasserringelementen (40), jedes umfassend
einen Zylinderlaufbuchsenabschnitt (42) mit einer Wandstruktur, die ein Durchgangsloch umgibt, um einen Durchlass für eine jeweilige Zylinderlaufbuchse in einem montierten Zustand des Wasserringelements (40) bereitzustellen; und
ein Kühlsystem für die Zylinderlaufbuchsen in dem montierten Zustand des Wasserringelements (40), wobei das Kühlsystem eine Leitungsstruktur mit zumindest einer Öffnung an einer Außenseite der Wandstruktur aufweist, die sich in Richtung zu der Motorblockseite des Wasserringelements (40) öffnet,
und wobei jedes an der Oberseite (21) montiert ist, sodass die zumindest eine Öffnung des Kühlsystems jedes Wasserringelements (40) und die zumindest eine Öffnung des Kühlwasserkanalsystems eines jeweiligen Ladeluftführungselements (23) fluidisch verbunden sind.

11. Verbrennungsmotor (1) nach Anspruch 10, wobei die zweite Auslassöffnung (45C) von jedem der Vielzahl von Ladeluftführungselementen (23A-23I) mit einem Ladelufteinlass (17A) des jeweiligen Zylinderkopfteils (17) verbunden ist, und/oder
wobei eine Richtung des ersten Durchlasses (48A) im Wesentlichen senkrecht zu der Richtung des Durchlasses durch den Wasserringabschnitt (42) des Wasserringelements (41) ausgerichtet ist.

12. Verbrennungsmotor (1) nach einem von Anspruch 10 oder Anspruch 11, wobei die Oberseite (23) des Motorblocks (10) einen ersten Abschnitt für eine erste Zylinderbank, einen zweiten Abschnitt für eine zweite Zylinderbank und einen horizontalen Übergangsabschnitt (21A) umfasst, wobei der erste Abschnitt und der zweite Abschnitt zueinander geneigt sind, um eine V-Konfiguration des Verbrennungsmotors (1) bereitzustellen und wobei sich das erste Schraubenführungsloch (64A) des Ladeluftführungselements (23) der ersten Zylinderbank senkrecht zu dem ersten Abschnitt erstreckt und wobei sich das zweite Schraubenführungsloch (64B) senkrecht zu dem horizontalen Übergangsabschnitt (21A) erstreckt.

13. Verbrennungsmotor (1) nach einem von Anspruch 10 bis Anspruch 12, wobei zumindest eines von dem Motorblock (10), dem Ladeluftführungselement (23) und dem Wasserringelement (40) eine einstückige gegossene Komponente ist.

14. Verbrennungsmotor (1) nach einem von Anspruch 10 bis 13, wobei das Kühlsystem umfasst
eine Kühlwasserzuführleitung (44A), die sich durch die Wandstruktur des Wasserringelements (40) erstreckt und konfiguriert ist, um, in dem montierten Zustand des Wasserringelements (40), Kühlwasser einer Kühlkammer zuzuführen, die zwischen der jeweiligen Zylinderlaufbuchse und der Wandstruktur gebildet ist, und
eine Kühlwasserrückführleitung (44B), die konfiguriert ist, um, in dem montierten Zustand des Wasserringelements (40), Kühlwasser zurückzuführen,
wobei die Kühlwasserzuführleitung (44A) und die Kühlwasserrückführleitung (44B) jeweils eine Öffnung an einer Außenseite der Wandstruktur des Wasserringelements (40) umfassen, die sich in Richtung der Motorblockseite des Wasserringelements (40) öffnet, und
wobei insbesondere die Öffnungen an der Außenseite der Wandstruktur des Wasserringelements (40) durch eine sich von der Außenseite der Wandstruktur erstreckende Hahnstruktur bereitgestellt sind.

15. Verbrennungsmotor (1) nach einem von Anspruch 10 bis Anspruch 14, wobei die Kühlwasserrückführleitung (44B) einen Kanal innerhalb der Wandstruktur des Wasserringelements (40) mit einer Öffnung an einer Zylinderkopfschnittstelle umfasst.

## Revendications

1. Elément de guidage d'air de suralimentation (23) pour un collecteur d'admission (22) d'un moteur à combustion interne (1) avec une pluralité d'unités cylindriques (16A-16I), l'élément de guidage d'air de suralimentation (23) comprenant :
une section d'écoulement traversante comprenant un premier passage (48A) connectant de manière fluidique un côté avant de l'élément de guidage d'air de suralimentation (23) avec un côté arrière de l'élément de guidage d'air de suralimentation (23) ;
une section d'alimentation d'un côté unité de cylindre de la section d'écoulement traversante, la section d'alimentation comprenant un second passage (48B) connectant de manière fluidique un côté supérieur de l'élément de guidage d'air de suralimentation (23) avec le premier passage (48A) ; **caractérisé en ce que**,
intégré dans une structure de paroi de l'élément de guidage d'air de suralimentation (23), un système de canal d'eau de refroidissement comprend au moins une ouverture du côté unité de cylindre de la section d'écoulement traversante, qui s'ouvre vers le côté supérieur de l'élément de guidage d'air de suralimentation (23), et au moins une ouverture d'un côté accès de l'élément de guidage d'air de suralimentation (23), le côté accès étant opposé au côté unité de cylindre.

2. Elément de guidage d'air de suralimentation (23) selon la revendication 1, dans lequel le système de canal d'eau de refroidissement comprend un canal d'alimentation (44A) et un canal de retour (44B), chacun ayant une ouverture du côté unité de cylindre de la section d'écoulement traversante, qui s'ouvre sensiblement dans la direction dans laquelle le second passage (48B) de la section d'alimentation s'ouvre du côté supérieur.

3. Elément de guidage d'air de suralimentation (23) selon la revendication 1 ou la revendication 2, dans lequel le système de canal d'eau de refroidissement comprend en outre un orifice d'évacuation d'eau de refroidissement (52A) dans une partie centrale de l'au moins un canal d'eau de refroidissement et/ou un orifice d'évacuation d'eau de refroidissement (52B) proche de l'au moins une ouverture du côté unité de cylindre.

4. Elément de guidage d'air de suralimentation (23) selon l'une quelconque des revendications précédentes, comprenant en outre un orifice d'évacuation de condensat (54A, 54B) connectant de manière fluidique le premier passage (48A) avec l'extérieur à une position dans laquelle le condensat s'accumule pendant l'utilisation.

5. Elément de guidage d'air de suralimentation (23) selon la revendication 4, dans lequel un orifice d'évacuation de condensat en ligne (54A) est positionné à côté d'un orifice d'évacuation d'eau de refroidissement dans une partie centrale de l'au moins un canal d'eau de refroidissement et/ou un orifice d'évacuation de condensat à configuration en V (54B) est positionné au-dessous d'une première ouverture de sortie (45B) du premier passage (48A).

6. Elément de guidage d'air de suralimentation (23) selon l'une quelconque des revendications précédentes, comprenant en outre un premier trou de guidage de vis (64A) du côté anneau d'eau qui est dirigé essentiellement orthogonalement vers le côté bloc moteur et un second trou de guidage de vis (64B) du côté accès, qui forme un angle par rapport au premier trou de guidage de vis (64A).

7. Elément de guidage d'air de suralimentation (23) selon l'une quelconque des revendications précédentes, dans lequel la section d'écoulement traversante comprend une ouverture d'entrée (45A) du côté avant de l'élément de guidage d'air de suralimentation (23), une première ouverture de sortie (45B) du côté arrière de l'élément de guidage d'air de suralimentation (23) opposé au côté avant, et le premier passage (48A) est formé dans la section d'écoulement traversante et connecte de manière fluidique l'ouverture d'entrée (45A) avec la première ouverture de sortie (45B), et/ou la section d'alimentation comprenant une seconde ouverture de sortie (45C) du côté supérieur de l'élément de guidage d'air de suralimentation (23) et le second passage (48B) est formé dans la section d'alimentation et connecte de manière fluidique la seconde ouverture de sortie (45C) avec le premier passage (48A).

8. Elément de guidage d'air de suralimentation (23) selon l'une quelconque des revendications précédentes, dans lequel le système de canal d'eau de refroidissement comprend
un canal d'alimentation (44A) ayant une ouverture d'entrée d'alimentation (60B) du côté accès de la section d'écoulement traversante et une ouverture de sortie d'alimentation (51) du côté unité de cylindre de la section d'écoulement traversante,
un canal de retour (44B) ayant une ouverture d'entrée de retour (51) du côté unité de cylindre de la section d'écoulement traversante et une ouverture de sortie de retour (60B) du côté accès de la section d'écoulement traversante, et
dans lequel l'ouverture d'entrée d'alimentation (60B), l'ouverture de sortie d'alimentation (51), l'ouverture d'entrée de retour (51), et l'ouverture de sortie de retour (60B) s'ouvrent essentiellement dans la direction dans laquelle le second passage (48B) de la section d'alimentation s'ouvre du côté supérieur.

9. Elément de guidage d'air de suralimentation (23) selon la revendication 8, dans lequel l'ouverture d'entrée d'alimentation (60B), l'ouverture de sortie d'alimentation (51), l'ouverture d'entrée de retour (51), et l'ouverture de sortie de retour (60B) sont orientées de sorte qu'un système de refroidissement d'un élément à anneau d'eau (40) est montable du même côté sur l'ouverture de sortie d'alimentation (51) et l'ouverture d'entrée de retour (51) lorsqu'un élément de tuyau de connexion (49) est montable sur l'ouverture d'entrée d'alimentation (60B) et l'ouverture de sortie de retour (60B).

10. Moteur à combustion interne (1) comprenant :
un bloc moteur (10) avec un côté supérieur (21), un premier côté d'extrémité (18L), et un second côté d'extrémité (18H), le second côté d'extrémité (18H) faisant face au premier côté d'extrémité (18H) ;
une pluralité d'unités de cylindre (16A-16I) montées du côté supérieur (21) et ayant des chemises de cylindre atteignant le bloc moteur (10) ;
un système d'air de suralimentation comprenant un collecteur d'admission (22) pour distribuer de l'air de suralimentation à chacune de la pluralité d'unités de cylindre (16A-16I), dans lequel le collecteur d'admission (22) comprend une pluralité d'éléments de guidage d'air de suralimentation (23A-23I) selon l'une quelconque de la revendication 1 à la revendication 9 montés du côté supérieur (21) ; et
une pluralité d'éléments à anneau d'eau (40), chacun comprenant une section de chemise de cylindre (42) avec une structure de paroi entourant un trou traversant pour fournir un passage pour une chemise de cylindre respective dans un état monté de l'élément à anneau d'eau (40) ; et
un système de refroidissement pour refroidir la chemise de cylindre dans l'état monté de l'élément à anneau d'eau (40), le système de refroidissement ayant une structure de conduite avec au moins une ouverture d'un côté extérieur de la structure de paroi qui s'ouvre vers le côté bloc moteur de l'élément à anneau d'eau (40),
et chacun monté du côté supérieur (21) de sorte que l'au moins une ouverture du système de refroidissement de chaque élément à anneau d'eau (40) et l'au moins une ouverture du système de canal d'eau de refroidissement de l'élément de guidage d'air de suralimentation (23) respectif sont connectées de manière fluidique.

11. Moteur à combustion interne (1) selon la revendication 10, dans lequel la seconde ouverture de sortie (45C) de chacun de la pluralité d'éléments de guidage d'air de suralimentation (23A-23I) est connectée de manière fluidique à une entrée d'air de suralimentation (17A) de la partie de tête de cylindre (17) respective, et/ou
dans lequel une direction du premier passage (48A) est essentiellement orientée orthogonalement à la direction du passage à travers la section d'anneau d'eau (42) de l'élément à anneau d'eau (41).

12. Moteur à combustion interne (1) selon l'une quelconque de la revendication 10 ou de la revendication 11, dans lequel le côté supérieur (23) du bloc moteur (10) comprend une première section pour une première rangée de cylindres, une seconde section pour une seconde rangée de cylindres, et une section de transition horizontale (21A), la première section et la seconde section sont inclinées l'une par rapport à l'autre pour fournir une configuration en V du moteur à combustion interne (1) et le premier trou de guidage de vis (64A) d'un élément de guidage d'air de suralimentation (23) de la première rangée de cylindres s'étend de manière orthogonale par rapport à la première section et le second trou de guidage de vis (64B) s'étend de manière orthogonale par rapport à la section de transition horizontale (21A).

13. Moteur à combustion interne (1) selon l'une quelconque de la revendication 10 à la revendication 12, dans lequel au moins l'un du bloc moteur (10), de l'élément de guidage d'air de suralimentation (23), et de l'élément à anneau d'eau (40) est un composant coulé en une pièce.

14. Moteur à combustion interne (1) selon l'une quelconque de la revendication 10 à 13, dans lequel le système de refroidissement comprend
une conduite d'alimentation en eau de refroidissement (44A) s'étendant à travers la structure de paroi de l'élément à anneau d'eau (40) et configurée pour, dans l'état monté de l'élément à anneau d'eau (40), fournir de l'eau de refroidissement à une chambre de refroidissement formée entre la chemise de cylindre respective et la structure de paroi, et
une conduite de retour d'eau de refroidissement (44B) configurée pour, dans l'état monté de l'élément à anneau d'eau (40), renvoyer l'eau de refroidissement,
dans lequel la conduite d'alimentation en eau de refroidissement (44A) et la conduite de retour d'eau de refroidissement (44B) comprennent chacune une ouverture à l'extérieur de la structure de paroi de l'élément à anneau d'eau (40) qui s'ouvre vers le côté bloc moteur de l'élément à anneau d'eau (40), et
dans lequel en particulier les ouvertures à l'extérieur de la structure de paroi de l'élément à anneau d'eau (40) sont fournies par une structure de robinet s'étendant depuis l'extérieur de la structure de paroi.

15. Moteur à combustion interne (1) selon l'une quelconque de la revendication 10 à la revendication 14, dans lequel la conduite de retour d'eau de refroidissement (44B) comprend un canal dans la structure de paroi de l'élément à anneau d'eau (40) avec une ouverture à l'interface de tête de cylindre.
